# EUROPEAN PATENT SPECIFICATION

(11) **EP 3 326 792 B1**
(45) Date of publication and mention of the grant of the patent: **31.08.2022**
(21) Application number: 16827293.8
(22) Date of filing: 05.07.2016
(51) Int. Cl.: B29C 73/08, B24B 5/36, B24D 7/02

(54) **TOOL FOR REPAIRING TYRE PUNCTURES**
WERKZEUG ZUR REPARATUR VON REIFENPANNEN
OUTIL POUR RÉPARER DES CREVAISONS DE PNEUMATIQUES

(30) Priority: 20.07.2015 ES 201500527 U
(43) Date of publication of application: 30.05.2018
(73) Proprietor: Talleres Rufino, S.L., 12594 Oropesa del Mar (Catellón) (ES); Gargallo Igual, Rufino, 12594 Oropesa del Mar (Catellón) (ES)
(72) Inventor: GARGALLO IGUAL, Rufino, 12594 Oropesa del Mar (Catellón) (ES)
(74) Representative: Del Valle Valiente, Sonia
(86) International application number: PCT/ES2016/000077
(87) International publication number: WO 2017/013280

(56) References cited:
- EP-A2- 0 618 044
- GB-A- 2 310 640
- US-A- 3 837 243
- US-A- 3 849 941
- US-A1- 2008 105 090
- US-A1- 2014 260 811
- US-B1- 6 170 361
- US-B1- 6 170 361

## Description

### Technical Sector

The purpose of this invention is to present a new tool for repairing tyre punctures, which allows to mill the hole created by the puncture and clean the contact area of the patch or repair mushroom plug at the same time.

This new tool for repairing punctures, is for a specific use within the tyre sector, where it is required to have a tool, with these characteristics.

### Prior Art

There are several types of tools available in the market for cleaning and repairing tyre punctures by patches or mushroom plugs; this is usually performed with a grinder, which is fitted with a sandpaper or emery stone type mill cutter, to clean the tyre's area to be repaired. The process is repeated using a conical milling cutter, with approximately the same diameter of the stem of the mushroom plug to be inserted, with which the hole is left free of edges and deformities.

US6170361 B1 discloses a tool for repairing tire punctures.

### Technical problem

With current tools, which lack a pneumatic-centring device, the mill cutter necessarily cleans a wider area and there is no uniformity in the cleaning area, doing unnecessary damage to the tyre and increasing its porosity.

In addition, with traditional repairs, the operator is obliged to clean the area to be repaired, firmly holding the tool as there is no guide and to observe the work done, exposing himself to pollutants by inhaling all the rubber dust generated by the mill cutter itself when cleaning the tyre area.

The current technique does not describe any type of tool for repairing tyre punctures, with the technical characteristics that are reported in this invention.

### Technical solution

This new tool for repairing tyre punctures is formed by a reamer solidly connected to an abrasive disc and a handle for securing a rotary tool, said reamer has a tip that acts as a centraliser for the abrasive disc.

The reamer has the geometry of any type of drill, mill cutter, filer, or any type of abrasive element.

This new tool for puncture repairs offers the following advantages:
It allows to improve safety and hygiene, as when using said tool, the operator does not have to get so close to the tyre while repairing it, significantly reducing the exposure to pollutants of said operator by inhalation of rubber dust.

It increases creases the quality of repairs, as the cleaning area with a centring device is reduced to the exact diameter of the patch or mushroom plug. In addition, the cleaned area is uniform and flat and therefore the adaptation of the patch to the tyre is perfect, reducing as a consequence the probability of air leaks due to irregularities.

Decrease of the working time used, as the two operations are carried out at the same time, the time used decreases considerably.

### Description of figures

To complement the description being made, and in order to help a better understanding of the characteristics of the invention, this descriptive report is accompanied, as an integral part of it, by a series of figures which, by way of example but not limited to, show the following:

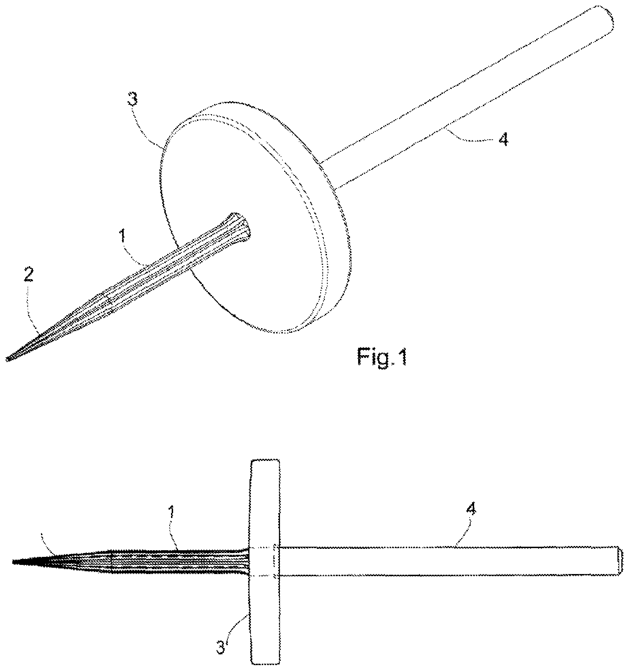

- Figure 1: Perspective view of the tool for repairing tyre punctures.
- Figure 2: Plan view of the tool for repairing tyre punctures.

### Mode of realizing the invention

As it is possible to observe in the attached figures, the tool for repairing tyre punctures is composed of a reamer (1) connected to an abrasive disk (3) and a handle (4) for securing a rotary tool.

Said reamer (1) has a tip (2) that acts as a centring device of the abrasive disc (3).

The reamer {1} has the geometry of any type of drill, mill cutter, filer, or any type of abrasive element.

Having sufficiently described the nature of this invention, as well as a way of putting it into practice, it only remains to be added that said invention may undergo certain changes in terms of form, arrangement and materials, provided that said alterations do not substantially change the characteristics of the invention which are claimed below.

## Claims

1. Tool for repairing tyre punctures, comprising a reamer (1) connected to an abrasive disk (3) and a handle (4) for securing a rotating tool, wherein said reamer (1) comprises a tip (2) which acts as a centring device for said abrasive disc (3)
wherein the reamer (1) comprises an elongated abrasive surface such that this elongated abrasive surfaces mill the inner surface of the hole created by the puncture in the tire and the abrasive disc cleans the area of the surface of the tire where the patch or mushroom tire plug will be applied.

## Patentansprüche

1. Werkzeug zum Reparieren von Reifendurchstichen, umfassend eine Reibahle (1), die mit einer Schleifscheibe (3) verbunden ist, und einen Griff (4) zum Anbringen eines Drehwerkzeugs; wobei die Reibahle (1) eine Spitze (2) umfasst, die als Zentriervorrichtung für die Schleifscheibe (3) fungiert, wobei die Reibahle (1) eine längliche Schleifoberfläche umfasst, sodass diese länglichen Schleifoberflächen die innere Oberfläche des Lochs fräsen, das durch den Durchstich in dem Reifen entstanden ist, und den Bereich der Oberfläche des Reifens reinigt, in dem der Flicken oder der Reparaturpilz angebracht wird

## Revendications

1. Outil pour réparer des crevaisons de pneumatique, comprenant un alésoir (1) relié à un disque abrasif (3) et une poignée (4) pour sécuriser un outil rotatif ; dans lequel ledit alésoir (1) comprend une pointe (2) qui agit en guise de dispositif de centrage pour ledit disque abrasif (3) dans lequel l'alésoir (1) comprend une surface abrasive allongée de sorte que cette surfaces abrasives allongées fraisent la surface interne du trou créé par la crevaison dans le pneu et que le disque abrasif nettoie la zone de la surface du pneu dans laquelle la rustine ou le champignon d'obturation de pneu sera appliqué
